# EUROPEAN PATENT APPLICATION

(11) **EP 3 925 448 A1**
(43) Date of publication of application: **22.12.2021**
(21) Application number: 20180083.6
(22) Date of filing: 15.06.2020
(51) Int. Cl.: A21C 9/04, A21C 9/08

(54) **METHOD AND A DEVICE FOR MOISTURIZING PIECES OF DOUGH**

(71) Applicant: Radie B.V., 4104 BC Culemborg (NL)
(72) Inventor: VAN BLOKLAND, Johannes Josephus Antonius, 4104 BC Culemborg (NL)
(74) Representative: Patentwerk B.V.

(57) **Abstract**

This invention relates to a method and device for applying moisture on a piece of dough comprising the steps of: supplying a piece of dough on a substrate; selectively applying moisture on a first predetermined area of the dough piece, while leaving adjacent areas of the dough piece unaltered, characterized in that the application of the moisture takes place: with a controlled density; with controlled dimensions, i.e. a controlled length and width on the dough piece; and free of contact. The device thereto comprises a conveyor, for conveying dough pieces in a first direction of conveyance towards a moisturizing stage; said moisturizing stage, comprising; at least one nozzle, said nozzle located above the conveyor transporting the dough pieces, for applying a stroke of moisture on the transported dough piece; a controller, for controlling a density and/or a width of the stroke of the applied moisture.

## Description

The present invention is related to a method and a device for moisturizing pieces of dough.

Methods for applying moisture on pieces of dough are known in the art. Applying moisture on pieces of dough occurs often in the production process of croissants. After the pieces of dough have been cut out of a sheet of dough, and ordered correctly, the surface of the dough piece is moisturized. This brings some advantages for further processing of the dough piece. First of all, it improves the ability of the dough piece to stick to a part of the processing line where the dough pieces are rolled into croissants. The moisture on the surface provides an increased grip allowing the croissant to be rolled up controllably. Furthermore, the moisture allows the layers to stick directly on each other after rolling the croissant. This is because the moisture acts like a sort of glue between the sheets of dough. Although moisturizing the dough piece is simple, and in some cases effective, it also results in a partly wetted conveyor belt. Besides that, the evenly moisturized dough piece has a further downside, once the piece is rolled into a croissant shape and the tips are bent. After bending the croissant tends to shape back into a straight croissant, which is an undesired effect. This sticking effect also has influence during the proofing and the baking process on the structure of the layers.

It is therefore a goal of the present invention to provide a method and a device for providing moisture on pieces of dough, that takes away the above disadvantages, and/or to provide a useful alternative to the state of the art.

The invention thereto proposes a method for applying moisture on a piece of dough comprising the steps of: a: supplying a piece of dough on a substrate; b: selectively applying moisture on a first predetermined area of the dough piece, while leaving adjacent areas of the dough piece unaltered, characterized in that the application of the moisture takes place: i: with a controlled density; ii: with controlled dimensions, i.e. a controlled length and width on the dough piece; and iii: free of contact.

This method has proven to be effective, in particular while making Italian type of croissants. Using this method of applying moisture on the piece of dough will make the piece of dough less likely to stick to the substrate, the same benefit would be present when making use of a conveyor or other transporting means for the dough piece. A yet further advantage of the present method is that there is less contamination underneath a conveyor belt. Another effect of the application of moisture according to the present invention is the reduced "mohawk" effect. This effect is the curling of the tip of the croissant, in particular the detachment of the tip from the body of the croissant, which is an undesired effect. The result of applying moisture according to the present invention is also that the dough piece will bake more evenly, which will result in a better end product. The fact that the application of the moisture is free of contact with the dough piece allows the process to be quick, since no contact with the dough piece has to be made during application. Contact with the dough piece would reduce the speed due to the fact that the dough piece can be damaged during the application of moisture using contact with the dough piece. Therefore, contact, except the contact with the substrate or a conveyor, with the dough piece should be avoided during the entire process.

In a further embodiment of the present invention the moisture is sprayed on the piece of dough. Spraying the moisture onto the piece of dough is efficient, spraying means can for example be configured to accurately spray on the predetermined area, which allows the present invention to furthermore reduce the contamination on the substrate or conveyor.

In a different embodiment of the present invention the moisture is applied along a symmetry axis of the dough piece. By applying moisture solely along a symmetry axis, the dough piece will remain in a better shape in the further processing steps of the dough piece. It is to be noted that application of moisture along a symmetry axis can be contemplated as applying a predetermined area of moisture, in particular an elongated predetermined area, which substantially covers the symmetry axis of the dough piece. In the case of a circular dough piece, any line going from the edge of the dough piece, through the centre, to an edge opposite of the first edge would satisfy this requirement.

In yet another embodiment of the present invention the applied moisture has a width between 0 mm and 20 mm, in particular between 5 mm and 10 mm. It has proven that this particular width provides an optimal coherence of the product, without introducing unnecessary stress in the dough. The width is just big enough to maintain the dough piece in its rolled up position, whilst avoiding further known issues where the entire dough piece is moisturized. It is to be noted that the stroke of moisture comprising above mentioned width is applied free of contact, and therefore has a tolerance of +- 5 mm.

In yet another embodiment the piece of dough has a substantially triangular shape, in particular a substantially triangular shaped dough piece for making a croissant, wherein the moisture is applied along a symmetry axis of the substantially triangular shaped dough piece. The substantially triangular shape is ideal for rolling croissants. In particular a trapezoidal shaped dough piece is used, wherein said trapezoidal shaped dough piece in a further specification comprises a notch at its tip and/or base.

In yet a different embodiment the present invention further comprising the step of: c: selectively applying moisture on a second predetermined area of the dough piece, while leaving adjacent areas of the dough piece unaltered, characterized in that the application of the moisture takes place: i: with a controlled density; ii: with controlled dimensions, i.e. a controlled length and width on the dough piece; iii: free of contact. In some cases it is desired or necessary to apply a second predetermined area of moisture. This second stroke of moisture ensures that the dough piece sticks to itself once rolled, which may be desired either during further handling, or during baking thereof.

In a further embodiment of the present invention the length of the second predetermined area is substantially perpendicular to the length of the first predetermined area. The second predetermined area should be perpendicular to the first predetermined area in order to, at least in this specific rolling method, avoid the dough from slipping through the roller. The second area enables the dough to stick to the roller shortly, which initiates the rolling of the dough piece into desired croissant shape.

In yet another embodiment of the present invention the second predetermined area of moisture is applied on and/or in contact with the base of the substantially triangular shaped dough piece. It has turned out that this location provides the best adhesion for croissants. The base of the dough piece is the first part to come into contact with the rolling stage of the processing line, therefore it is needed that this part of the dough piece does not slip underneath the roller, since this would result in unrolled pieces of dough. A second predetermined area of moisture may be applied at a location downstream from a location where the first predetermined area of moisture is applied.

In yet a different embodiment the piece of dough is stretched before application of the moisture, in particular stretched between 0% and 100% of its original length, more in particular between 0% and 50% of its original length. Stretching the dough piece may be done for rheologic reasons and in order to obtain a desired shape of croissant. By transporting the pieces of dough in a relatively small size, more of them can fit on a conveyor. In order to achieve a desired croissant shape it might be necessary to stretch the dough piece before rolling.

In again another embodiment of the present invention the dough pieces are conveyed on the substrate during the application of the moisture. That is, the dough piece moves underneath the stage of the processing line where moisture is applied. A more controlled application of moisture is realized by moving the dough piece. Another benefit of moving the dough piece is a more compact and easy to manufacture moisturizing stage, which could for example be stacked in existing dough processing lines without any major modification of the dough processing line.

Again in another embodiment the present invention further comprises the step of: d: rolling the piece of dough, wherein after rolling the dough piece, the moisturized stroke makes contact with a part of the dough piece which is not moisturized. This step is in particular relevant when the method according to the invention is used to make croissants. In a further embodiment the moisturized area of the dough piece and the part of the dough piece which is not moisturized concerns contact lines whose mutual position does not, or should not, change during the proofing of the rolled up dough piece. This way, the croissant is kept in its rolled orientation during rise and/or baking, while no stress is caused that leads to deformation of the croissant.

This inventions also relates to a device for applying a stroke of moisture on a piece of dough, comprising; a conveyor, for conveying dough pieces in a first direction of conveyance towards a moisturizing stage; said moisturizing stage, comprising; at least one nozzle, said nozzle located above the side of the conveyor transporting the dough pieces, for applying a stroke of moisture on the transported dough piece; a controller, for controlling a density and/or a width of the stroke of the applied moisture. The device for applying a stroke of moisture on a piece of dough allows to apply the moisture in a controlled manner to the piece of dough, in particular controlled and free of contact with the piece of dough. It is furthermore conceivable that the device comprises multiple stages of nozzles, in particular a first stage for applying a first stroke of moisture on the dough pieces, and a second stage of nozzles for applying a second stroke of moisture on the dough pieces, in particular a second stroke which is substantially perpendicular to the first stroke of moisture applied to the dough pieces. The nozzles comprise an electronic connection, to activate said nozzles either directly or indirectly through a controller or the like. Furthermore the nozzles comprise a liquid connection, for providing liquid to the nozzle for moisturizing.

In a further embodiment of the device the nozzle is located at least 5 cm above the conveyor, in particular at least 15 cm above the conveyor[BvO|PB1]. This height has proven to allow the conveyor to move at an optimum speed for applying an accurate stroke of moisture on the piece of dough.

In yet another embodiment of the device according to the present invention the moisturizing stage and/or other upstream dough processing means, coupled to the moisturizing stage, comprises at least one sensor, which provides details regarding the position of dough pieces. Yet in a further embodiment the controller is further configured to enable the moisturizing stage to only moisturize the dough piece, and not on the conveyor. By controlling the nozzles in such a manner the amount of liquid used is reduced to a minimum. Furthermore, the amount of liquid which is dropped on the conveyor is reduced, which results in a processing line which needs less cleaning and therefore has a longer running time.

In yet another embodiment the nozzle is movable in a direction perpendicular to the first direction of conveyance. This movement of the nozzle can be either manually by attachment means, or continuously by means of a drive for the movement. This way small fluctuations in position of the dough pieces arriving can be counteracted. If the nozzle is moved manually the nozzle is thereto equipped with an attachable element, the element can be moved for example along a slit, which slit is provided in a guiding rails to which the nozzles are attached. The attachable element can in a further embodiment be a screw or a clip. The guiding rails to which the nozzles are attached can further be provided with indication means for accurately placing the nozzle above the conveyor. Such indication means could in its simples form be a ruler which is engraved on the guiding rails.

In again a different embodiment the conveyor transports substantially triangular or trapezoid shaped dough pieces. The triangular dough pieces are substantially positioned in the same direction. In a further embodiment the controller is further configured to apply moisture along the symmetry axis of the dough piece. The controller may for example control the location of the nozzle, in particular position the nozzle right above the symmetry axis of the upcoming dough piece moving underneath the nozzle.

In another embodiment the device further comprises a rolling stage, situated downstream of the moisturizing stage, wherein the rolling stage is configured to roll the pieces of dough into croissants. Rolling the pieces of dough into croissants can occur either clockwise or counter clockwise, depending on the rolling stage.

The present invention will hereinafter be further elucidated based on the following figures, wherein:
- fig 1 shows an exemplary dough piece which is moisturized according to the present invention,
- fig 2a shows a first perspective view of the device for applying moisture, and
- fig 2b shows a second perspective view of the device for applying moisture.

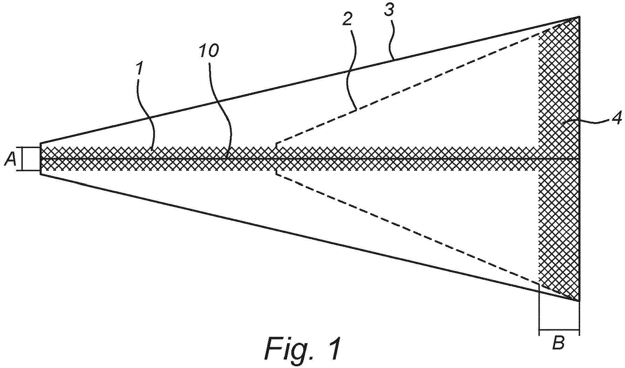

Figure 1 shows an exemplary dough piece 3 which is provided moisture. The moisture is applied at a first predetermined area 1, along the symmetry axis 10 of the dough piece 3. A second predetermined area 4, along the base of the dough piece is also provided with moisture. In this embodiment the width A of the first predetermined area that is provided with moisture is smaller than the width B of the second predetermined area that is provided with moisture. However, the present invention is not limited to this situation, it might be conceivable in different embodiments that the width A of the first predetermined area is bigger than the width B of the second predetermined area. The dough piece 3 shown in this figure is stretched before the application of the moisture, the original shape 2 of the dough piece is indicated in this figure as well. Although it has to be pointed out that this method is applicable on both stretched and unstretched pieces of dough.

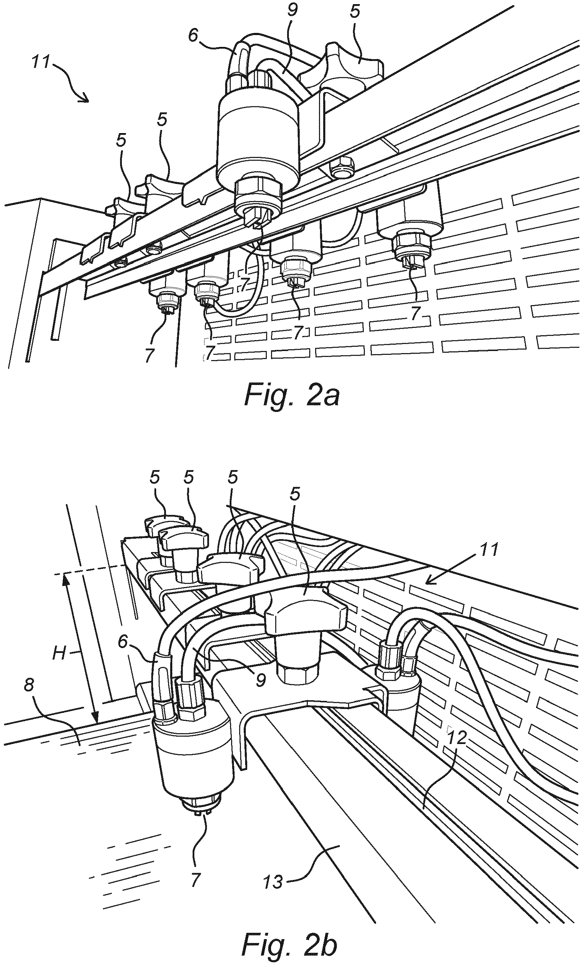

Figure 2a and figure 2b both show a perspective of the device for applying moisture on a piece of dough. The device comprises a conveyor 8, for conveying dough pieces in a first direction of conveyance towards a moisturizing stage 11; said moisturizing stage 11, comprising; at least one nozzle 7, said nozzle 7 located above the conveyor 8 transporting the dough pieces, for applying a stroke of moisture on the transported dough piece; a controller, for controlling a density and/or a width of the stroke of the applied moisture. In this exemplary embodiment the device comprises multiple stages of nozzles 7, in particular a first stage for applying a first stroke of moisture on the dough pieces, and a second stage of nozzles for applying a second stroke of moisture on the dough pieces, in particular a second stroke which is substantially perpendicular to the first stroke of moisture applied to the dough pieces. The nozzles comprise an electronic connection 6, to activate said nozzles either directly or indirectly through a controller or the like. Furthermore the nozzles comprise a liquid connection 9, for providing liquid to the nozzle for moisturizing. the nozzles 7 are located at a predetermined height H above the conveyor 8. This height H has proven to allow the conveyor 8 to move at an optimum speed for applying an accurate stroke of moisture on the piece of dough. In order to realize the most accurate application of the moisture the nozzles 7 are movable in a direction perpendicular to the first direction of conveyance. This movement of the nozzles 7 can be either manually by attachment means, or continuously by means of a drive for the movement. This allows to even out small fluctuations in position of the dough pieces arriving. If the nozzle 7 is moved manually the nozzle 7 is thereto equipped with an attachable element 5, the element 5 can be moved for example along a slit 12, which slit 12 is provided in a guiding rails 13 to which the nozzles 7 are attached. The attachable element 5 can in a further embodiment be a screw or a clip. The guiding rails 13 to which the nozzles 7 are attached can further be provided with indication means for accurately placing the nozzle 7 above the conveyor. Such indication means could in its simplest form be a ruler which is engraved on the guiding rails 13.

## Claims

1. Method for applying moisture on a piece of dough comprising the steps of:
a. supplying a piece of dough on a substrate;
b. selectively applying moisture on a first predetermined area of the dough piece, while leaving adjacent areas of the dough piece unaltered, **characterized in that** the application of the moisture takes place:
i. with a controlled density;
ii. with controlled dimensions, i.e. a controlled length and width on the dough piece; and
iii. free of contact.

2. Method according to claim 1, wherein the moisture is sprayed on the piece of dough.

3. Method according to any of the preceding claims, wherein the moisture is applied along a symmetry axis of the dough piece.

4. Method according to any of the preceding claims, wherein the applied moisture has a width between 0 mm and 20 mm, in particular between 5 mm and 10 mm.

5. Method according to any of the preceding claims, wherein the piece of dough has a substantially triangular or trapezoid shape, in particular a substantially triangular shaped dough piece for making a croissant, wherein the moisture is applied along a symmetry axis of the substantially triangular shaped dough piece.

6. Method according to claim 5, further comprising the step of:
c. Selectively applying moisture on at least a second predetermined area of the dough piece, while leaving adjacent areas of the dough piece unaltered, **characterized in that** the application of the moisture on the second predetermined area also takes place:
i. with a controlled density;
ii. with controlled dimensions, i.e. a controlled length and width on the dough piece;
iii. free of contact.

7. Method according to claim 6, wherein the orientation of the second predetermined area is substantially perpendicular to the orientation of the first predetermined area.

8. Method according to any of the claims 6-7, wherein the second predetermined area of moisture is applied on and/or in contact with the base of the substantially triangular shaped dough piece.

9. Method according to claim 8, wherein the second predetermined area of moisture is applied at a location downstream from a location where the first predetermined area of moisture is applied.

10. Method according to any of the preceding claims, wherein the piece of dough is stretched before application of the moisture, in particular stretched between 0% and 100% of its original length, more in particular between 0% and 50% of its original length.

11. Method according to any of the preceding claims, wherein the dough pieces are conveyed on the substrate during the application of the moisture.

12. Method according to any of the preceding claims, further comprising the step of:
d. rolling the piece of dough, wherein after rolling the dough piece, the moisturized stroke makes contact with a part of the dough piece which is not moisturized.

13. Method according to claim 12, wherein the contact between the moisturized area of the dough piece and the part of the dough piece which is not moisturized concerns contact lines whose mutual position does not, or should not, change during the proofing and/or rise of the rolled up dough piece in a subsequent dough processing step.

14. Device for applying a stroke of moisture on a piece of dough, comprising;
- a conveyor, for conveying dough pieces in a first direction of conveyance towards a moisturizing stage;
said moisturizing stage, comprising;
- at least one nozzle, said nozzle located above the conveyor transporting the dough pieces, for applying a stroke of moisture on the transported dough piece;
- a controller, for controlling a density and/or a width of the stroke of the applied moisture.

15. Device according to claim 14, wherein the nozzle is located at least 5 cm above the conveyor, in particular at least 15 cm above the conveyor.

16. Device according to any of the claims 14 - 15, wherein the moisturizing stage and/or other upstream dough processing means, coupled to the moisturizing stage, comprises at least one sensor, which provides details regarding the position of dough pieces.

17. Method according to claim 16, wherein the controller is further configured to enable the moisturizing stage to only moisturize the dough piece, and not on the conveyor.

18. Device according to any of the claims 14 - 17, wherein the nozzle is movable in a direction perpendicular to the first direction of conveyance.

19. Device according to any of the claims 14 - 18, wherein the conveyor transports substantially triangular shaped dough pieces.

20. Device according to claim 19, wherein the controller is further configured to apply moisture along the symmetry axis of the dough piece.

21. Device according to any of the claims 14-20, wherein the device further comprises a rolling stage, situated downstream of the moisturizing stage, wherein the rolling stage is configured to roll the pieces of dough into croissants.

## Amended claims

### Amended claims in accordance with Rule 137(2) EPC.

1. Method for applying moisture on a piece of dough, wherein the piece of dough is a croissant, comprising the steps of:
a. supplying a piece of dough on a substrate;
b. selectively applying moisture on a first predetermined area of the dough piece, such that the moisture on the surface provides an increased grip allowing the croissant to be rolled up controllably;
c. rolling up the croissant;
d. wherein the moisture allows layers of the rolled croissant to stick directly on each other wherein the moisture acts like a glue between the sheets of dough, while leaving adjacent areas of the dough piece unaltered, **characterized in that** the application of the moisture takes place:
i. with a controlled density;
ii. with controlled dimensions, i.e. a controlled length and width on the dough piece; and
iii. free of contact, wherein the moisture is sprayed on the piece of dough and, wherein the moisture is applied along a symmetry axis of the dough piece, and wherein the applied moisture has a width between 0 mm and 20 mm, in particular between 5 mm and 10 mm.

2. Method according to any of the preceding claims, wherein the piece of dough has a substantially triangular or trapezoid shape, in particular a substantially triangular shaped dough piece for making a croissant, wherein the moisture is applied along a symmetry axis of the substantially triangular shaped dough piece.

3. Method according to claim 2, further comprising the step of:
e. Selectively applying moisture on at least a second predetermined area of the dough piece, while leaving adjacent areas of the dough piece unaltered, **characterized in that** the application of the moisture on the second predetermined area also takes place:
i. with a controlled density;
ii. with controlled dimensions, i.e. a controlled length and width on the dough piece;
iii. free of contact, wherein the orientation of the second predetermined area is substantially perpendicular to the orientation of the first predetermined area.

4. Method according to claims 2 or 3, wherein the second predetermined area of moisture is applied on and/or in contact with the base of the substantially triangular shaped dough piece.

5. Method according to claim 4, wherein the second predetermined area of moisture is applied at a location downstream from a location where the first predetermined area of moisture is applied.

6. Method according to any of the preceding claims, wherein the piece of dough is stretched before application of the moisture, in particular stretched between 0% and 100% of its original length, more in particular between 0% and 50% of its original length.

7. Method according to any of the preceding claims, wherein the dough pieces are conveyed on the substrate during the application of the moisture.

8. Method according to any of the preceding claims, further comprising the step of:
f. rolling the piece of dough, wherein after rolling the dough piece, the moisturized stroke makes contact with a part of the dough piece which is not moisturized.

9. Method according to claim 8, wherein the contact between the moisturized area of the dough piece and the part of the dough piece which is not moisturized concerns contact lines whose mutual position does not, or should not, change during the proofing and/or rise of the rolled up dough piece in a subsequent dough processing step.

10. Device for applying a stroke of moisture on a piece of dough, comprising;
- a conveyor, for conveying dough pieces in a first direction of conveyance towards a moisturizing stage, said moisturizing stage, comprising;
- at least one nozzle, said nozzle located above the conveyor transporting the dough pieces, for applying a stroke of moisture on the transported dough piece;
- a controller, for controlling a density and/or a width of the stroke of the applied moisture, wherein the moisture is sprayed on the piece of dough and, wherein the moisture is applied along a symmetry axis of the dough piece, and wherein the applied moisture has a width between 0 mm and 20 mm, in particular between 5 mm and 10 mm.

11. Device according to claim 10, wherein the nozzle is located at least 5 cm above the conveyor, in particular at least 15 cm above the conveyor.

12. Device according to any of the claims -10 or 11, wherein the moisturizing stage and/or other upstream dough processing means, coupled to the moisturizing stage, comprises at least one sensor, which provides details regarding the position of dough pieces.

13. Method according to claim 12, wherein the controller is further configured to enable the moisturizing stage to only moisturize the dough piece, and not on the conveyor.

14. Device according to any of the claims 10-13, wherein the nozzle is movable in a direction perpendicular to the first direction of conveyance.

15. Device according to claim 14, wherein the controller is further configured to apply moisture along a symmetry axis of the dough piece.

16. Device according to any of the claims 10-15, wherein the device further comprises a rolling stage, situated downstream of the moisturizing stage, wherein the rolling stage is configured to roll the pieces of dough into croissants.
